Europäisches Patentamt

European Patent Office

Office européen des brevets

(11) Numéro de publication: **0 368 745**
**A1**

## DEMANDE DE BREVET EUROPEEN

(21) Numéro de dépôt: 89403059.2

(51) Int. Cl.5: **G06F 15/70**

(22) Date de dépôt: 07.11.89

(30) Priorité: 10.11.88 FR 8814675

(43) Date de publication de la demande:
16.05.90 Bulletin 90/20

(84) Etats contractants désignés:
**CH DE GB IT LI NL SE**

(71) Demandeur: **THOMSON-CSF**
**51, Esplanade du Général de Gaulle**
**F-92800 Puteaux(FR)**

(72) Inventeur: **Thoreau, Dominique**
**THOMSON-CSF SCPI Cédex 67**
**F-92045 Paris la Défense(FR)**
Inventeur: **Le Polles, Pascal**
**THOMSON-CSF SCPI Cédex 67**
**F-92045 Paris la Défense(FR)**

(74) Mandataire: **Turlèque, Clotilde et al**
**THOMSON-CSF SCPI**
**F-92045 PARIS LA DEFENSE CEDEX 67(FR)**

(54) **Procédé pour recaler une image en rotation et dispositif pour la mise en oeuvre de ce procédé.**

(57) Ce procédé consiste essentiellement à calculer, pour l'image à recaler et pour l'image de référence :
- une matrice de coefficients transformés par la transformation de Fourier discrète, à deux dimensions, et pondérés ;
- des valeurs discrètes d'une fonction énergie sur des rayons (CB) régulièrement répartis autour du centre de la matrice pondérée,
- les valeurs discrètes d'une fonction d'intercorrélation des deux fonctions énergies, de l'image de référence et de l'image à recaler, pour des valeurs de décalage angulaire correspondant respectivement aux dits rayons (CB) ;
- estimer une valeur d'angle de recalage, en recherchant le maximum de la fonction d'intercorrélation.

Une variante du procédé permet en outre de calculer un vecteur de translation, dans le cas où une image est à recaler à la fois en rotation et en translation.

Application aux traitements d'images.

FIG.2

# PROCEDE POUR RECALER UNE IMAGE EN ROTATION ET DISPOSITIF POUR LA MISE EN OEUVRE DE CE PROCEDE

L'invention concerne un procédé pour recaler une image en rotation, par rapport à une image de référence, pour faire coïncider les éléments communs à ces deux images. Un tel procédé est applicable, par exemple, au recalage du fond d'une suite d'images, préalable à la détection et à l'estimation du mouvement d'un objet par rapport au fond de ces images.

Le document : IEET Transactions on pattern analysis and machine intelligence vol. PAMI 9, NO. 9, September 1987, décrit un procédé pour recaler une image en rotation et en translation, par rapport à une image de référence en utilisant les propriétés de la transformation de Fourier. Ce procédé consiste à :
- échantillonner l'image à recaler et l'image de référence, chaque échantillon étant représenté par la valeur de sa luminance ;
- calculer, pour une série de valeurs d'angle $\theta$, une matrice dite décalée, dont chaque coefficient est déduit de la matrice des coefficients transformés de l'image à recaler, par une rotation centrée autour du centre de cette matrice, et d'angle $\theta$, ce coefficient étant calculé par interpolation ;
- calculer, pour chaque valeur de l'angle $\theta$, une matrice dont chaque coefficient est égal au rapport d'un coefficient de la matrice des coefficients transformés de l'image de référence, et d'un coefficient de la matrice décalée par la rotation d'angle $\theta$ ; puis transformer cette matrice par la transformation de Fourier inverse, et déterminer parmi les coefficients obtenus pour chaque matrice transformée inverse, le coefficient ayant la plus grande valeur ;
- déterminer le coefficient ayant la plus grande valeur parmi les coefficients ayant la plus grande valeur pour chacune des valeurs de l'angle $\theta$, la valeur correspondante de l'angle $\theta$ constituant l'angle de rotation de l'image à recaler par rapport à l'image de référence.

Si la rotation n'est pas combinée à une translation, il est possible de restituer une image recalée dont les valeurs de luminance sont calculées à partir de la valeur d'angle calculée, et à partir des valeurs de luminance de l'image à recaler. Par contre, si la rotation est combinée à une translation, une seconde étape du procédé, destinée à recaler l'image en translation, consiste à :
- calculer une matrice dite de différence de phase, dont chaque coefficient est égal au produit d'un coefficient transformé de l'image de référence, par le conjugué d'un coefficient transformé homologue de l'image à recaler, divisé par le module du produit de ces deux coefficients ;
- calculer une matrice dite matrice transformée inverse de la matrice de différence de phase, obtenue en appliquant la transformation de Fourier inverse à la matrice de différence de phase ;
- déterminer le coefficient ayant la plus grande amplitude parmi les coefficients de la matrice transformée inverse de la matrice de différence de phase, le rang de la ligne et le rang de la colonne de ce coefficient constituant les composantes d'un vecteur de translation de l'image de référence à l'image à recaler ;
- calculer les valeurs de luminance d'une image recalée, à partir de la valeur d'angle déterminée précédemment, à partir du vecteur de translation estimé précédemment, et à partir des valeurs de luminance de l'image à recaler.

Ce procédé connu a pour inconvénient de nécessiter de nombreux calculs pour estimer l'angle de rotation. Il consiste en effet à fixer un intervalle dans lequel l'angle de rotation est compris vraisemblablement, par exemple 25° à 30°, puis à essayer toutes les valeurs d'angle possibles dans cet intervalle avec un pas prédéterminé, par exemple 1°. Pour chaque essai il est nécessaire de calculer la transformée de Fourier inverse d'une matrice, ce qui nécessite un long temps de calcul. Le but de l'invention est de remédier à cet inconvénient du procédé connu. Le procédé selon l'invention consiste essentiellement à estimer l'angle de rotation en cherchant à faire coïncider la forme du graphe de la transformée de Fourier de l'image de référence et la forme du graphe de la transformée de Fourier de l'image à recaler, dans le plan des fréquences.

Selon l'invention, le procédé pour recaler une image en rotation, par rapport à une image de référence, est caractérisé en ce que, pour déterminer un angle de recalage en rotation, il consiste à :
- échantillonner l'image à recaler et l'image de référence, selon une matrice d'échantillonnage, chaque échantillon étant représenté par la valeur de sa luminance ;
- calculer, pour l'image à recaler et pour l'image de référence :
-- une matrice dite pondérée, obtenue en pondérant la valeur de luminance de chaque échantillon d'image, par une fonction positive décroissante en fonction de la distance de l'échantillon par rapport au centre de la matrice d'échantillonnage ;
-- une matrice de coefficients transformés, par la transformation de Fourier discrète, à deux dimensions ;
-- des valeurs d'une fonction énergie sur des rayons répartis autour du centre de la matrice des coefficients, en intégrant les valeurs des coefficients transformés, situés sur chaque rayon, entre deux points ayant des distances prédéterminées, par rapport au centre de la matrice ;

- calculer des valeurs d'une fonction d'intercorrélation des deux fonctions énergies, pour des valeurs de décalage angulaires correspondant respectivement aux rayons répartis autour des centres des deux matrices de coefficients transformés ;

- estimer une valeur d'angle de recalage en rotation, à partir de la valeur discrète maximale de cette fonction d'intercorrélation.

L'invention sera mieux comprise et d'autres détails apparaîtront à l'aide de la description ci-dessous et des figures l'accompagnant :

- la figure 1 représente schématiquement le graphe de la transformée de Fourier d'une image, sans pondération ;

- la figure 2 représente schématiquement le graphe de la transformée de Fourier de la même image, qui constitue une image de référence, avec une pondération favorisant les basses fréquences spatiales ;

- la figure 3 représente schématiquement le graphe de la transformée de Fourier d'une autre image, l'image à recaler, avec une pondération identique à celle de l'image précédente ;

- la figure 4 représente la répartition de l'énergie sur des rayons répartis régulièrement autour du centre de symétrie du graphe de la transformée de Fourier de l'image de référence, représentée sur la figure 2 ;

- la figure 5 représente la répartition de l'énergie sur des rayons répartis régulièrement autour du centre de symétrie du graphe de la transformée de Fourier de l'image à recaler, qui est représentée sur la figure 3 ;

- la figure 6 représente la fonction d'intercorrélation de ces deux fonctions de répartition, et illustre la détermination de l'angle de rotation séparant l'image de référence et l'image à recaler ;

- la figure 7 illustre l'application du procédé selon l'invention, au recalage d'une image à la fois en rotation et en translation ;

- la figure 8 illustre une étape du procédé selon l'invention, consistant à estimer un vecteur de translation, après avoir réalisé un recalage en rotation ;

- la figure 9 représente le schéma synoptique d'un exemple de réalisation d'un dispositif pour la mise en oeuvre du procédé selon l'invention ;

- la figure 10 représente le schéma synoptique d'une variante de cet exemple de réalisation.

Le procédé selon l'invention comporte successivement une première partie réalisant un recalage en rotation, puis une seconde partie réalisant un recalage en translation. Considérons tout d'abord le cas d'une rotation pure. Le recalage en rotation utilise la propriété de conservation de la transformée de Fourier dans une rotation. On montre que, pour une image infinie, une rotation centrée sur l'origine du repère des coordonnées ne modifie pas la transformée de Fourier de cette image. Dans le cas d'une image finie, il existe des parties non communes entre l'image de référence et l'image à recaler. On montre que l'existence de parties non communes entre les deux images conduit à rajouter des termes correctifs dans l'expression mathématique de la transformée de Fourier, mais ces parties non communes représentent généralement une minorité de la surface des deux images, ce qui rend les termes correctifs négligeables dans l'application considérée.

Dans cette application, une rotation est supposée centrée au centre de l'image à recaler, et non pas à l'origine du repère lié à cette image. Cette origine est supposée située au centre du premier pixel analysé, lequel est généralement en haut et à gauche dans l'image. On montre que le choix d'un tel centre de rotation, équivaut à une translation de ce centre de rotation et conduit à multiplier chaque coefficient transformé par une valeur E qui est fonction notamment du vecteur reliant l'origine du repère de l'image de référence, et le centre de rotation.

Considérons par exemple une image à recaler et une image de référence constituées par des images de télévision classique, qui sont échantillonnées à raison de N échantillons par ligne, sur M lignes. Chaque image est représentée par un tableau de N x M valeurs de luminance. Chaque pixel d'une image est repéré par ses coordonnées $(x,y)$ dans un repère xoy lié à l'image et dont l'origine est au centre du premier pixel analysé dans cette image. La luminance du pixel de coordonnées $(x,y)$ est notée $f(x,y)$.

Une première étape du procédé sur l'invention consiste à appliquer la transformation de Fourier discrète, à deux dimensions, à l'image de référence et à l'image à recaler. Chaque coefficient transformé, noté $F(u,v)$, est égal à :

$$F(u,v) = \frac{1}{N} \cdot \frac{1}{M} \cdot \sum_{x=0}^{N-1} \sum_{y=0}^{M-1} f(x,y) \cdot \exp\left[-2j\pi \cdot \left(\frac{x \cdot u}{N} + \frac{y \cdot v}{M}\right)\right] \qquad (1)$$

où  u = 0,..., N-1 et v = 0,···· , M-1

Pour simplifier les calculs, M est choisi égal à N, de préférence. Par exemple, N = M = 512. Le graphe de la transformée de Fourier d'une image qui est représentée par N.N valeurs de luminance comporte N.N coefficients transformés F(u,v) et il peut être représenté par une surface ayant deux dimensions correspondant aux fréquences u et v, et ayant une troisième dimension correspondant au module des coefficients F (u,v). Pour visualiser ce graphe, il est possible de représenter au moins une courbe de niveau projetée sur le plan des fréquences (u,v). Cette courbe passe par chaque point de coordonnées (u,v) où la valeur du coefficient transformé est égale à une valeur donnée.

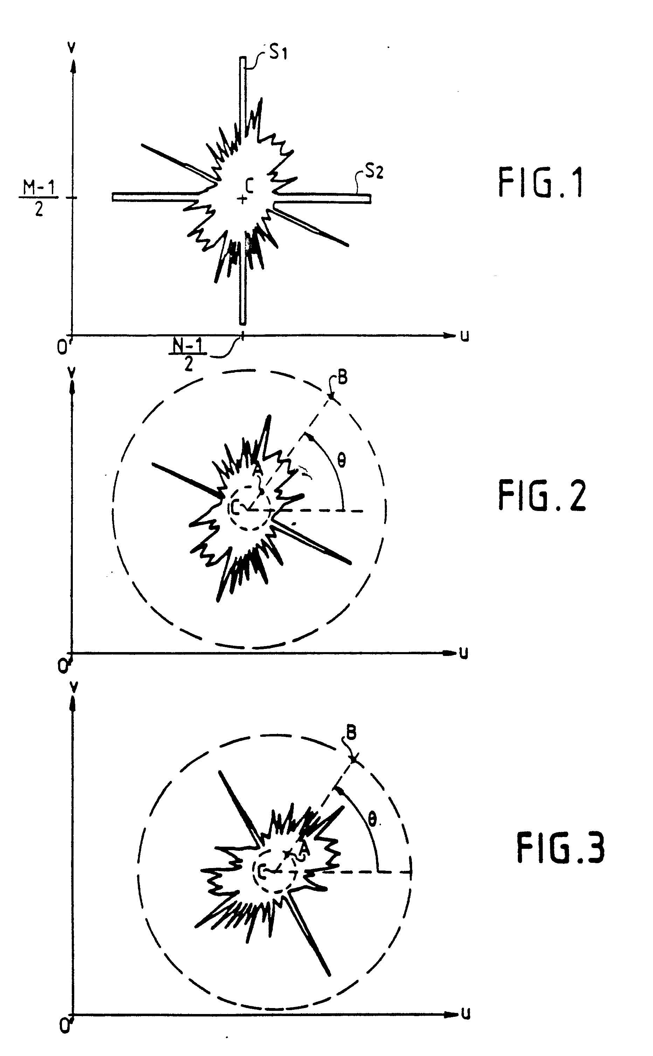

La figure 1 représente ainsi le graphe de la transformée de Fourier d'une image, en se limitant à une seule courbe de niveau. Ce graphe comporte un centre de symétrie C ayant pour coordonnée [(N-1)/2, (M-1)/2], qui correspond à la propriété de symétrie hermitienne de la transformation de Fourier. D'autre part, il est à remarquer que ce graphe comporte deux axes S1 et S2 respectivement parallèles aux deux axes des fréquences o'u et o'v, et ayant une forte énergie. Ils forment une croix passant par le centre de symétrie du graphe. L'axe (S1) est situé à l'abscisse (N-1)/2 et l'axe (S2) est situé à l'ordonnée (M-1)/2. Ces deux axes correspondent aux discontinuités des bords de l'image et sont donc présents sur le graphe de la transformée de Fourier de chaque image.

Le graphe de la transformée de Fourier de l'image à recaler comporte lui aussi deux axes, S1, S2, respectivement parallèles à o'v et à o'u ; et possède le même centre de symétrie C. Par contre, le reste du graphe est décalé par une rotation autour du centre de symétrie du graphe, à cause de la propriété de conservation des valeurs des coefficients transformés dans une rotation. Mais les deux axes de forte énergie restent fixes quel que soit l'angle de rotation. L'angle de rotation entre les deux graphes est égal à l'angle de rotation entre les deux images. Malheureusement la présence des deux axes S1 et S2 est gênante pour déterminer l'angle de rotation des deux graphes.

Une étape préliminaire du procédé selon l'invention consiste à pondérer les valeurs de luminance des échantillons d'image, en fonction de la distance entre l'échantillon et le centre de la matrice d'échantillonnage. Cette pondération des valeurs de luminance sur les bords d'image provoque une atténuation des coefficients correspondant aux deux axes de forte énergie, S1 et S2.

Les figures 2 et 3 représentent respectivement les graphes des transformées de Fourier de l'image de référence et de l'image à recaler, sous la forme d'une courbe de niveau projetée dans 'e plan des fréquences (u,v), après une telle pondération des valeurs de luminance. La croix constituée par les deux axes de forte énergie n'apparaît plus, le graphe correspondant à l'image à recaler se déduit du graphe correspondant à l'image de référence par une simple rotation autour du centre de symétrie, avec un angle de rotation qui est égal à l'angle de rotation affectant l'image à recaler par rapport à l'image de référence. Le procédé selon l'invention met à profit cette propriété pour déterminer l'angle de rotation séparant ces images.

La pondération peut être réalisée selon diverses formules connues pour réaliser une fenêtre à deux dimensions. Une fenêtre de Hamming est utilisée de préférence. Elle est définie par le coefficient de pondération suivant :

W(n) = 0,54-0,46. $\cos(\frac{2\pi}{N} x n)$     (2)

où n = 0,1,..., N-1

dans laquelle n est fonction de la position de l'échantillon d'image à pondérer, dans la matrice d'échantillonnage. Dans le cas d'une image carrée, la matrice d'échantillonnage est une matrice carrée et la fenêtre est circulaire. Le nombre n est alors égal à l'entier le plus proche de la distance séparant l'échantillon du centre de la matrice. Dans le cas d'une image rectangulaire, la fenêtre n'est plus circulaire mais elliptique et n dépend de la distance entre l'échantillon à pondérer et deux points constituant les foyers de la fenêtre elliptique. Il est à noter cependant que la pondération par une fenêtre risque d'atténuer les fréquences les plus caractéristiques du graphe. Cette perte d'informations ne doit pas être trop élevée pour ne pas empêcher la mise en coïncidence des deux graphes.

Pour mettre en coïncidence les deux graphes, une troisième étape du procédé selon l'invention consiste à calculer les valeurs d'une fonction énergie sur des rayons régulièrement répartis autour du centre de la matrice des coefficients de transformation. Pour chaque rayon, une valeur d'énergie est

4

calculée en intégrant les valeurs des coefficients situés sur ce rayon, entre un premier point correspondant à une fréquence minimale et un second point correspondant à une fréquence maximale. Par exemple, les rayons sont séparés d'un angle égal à $\Pi/2N$, et font un angle $\theta$ par rapport à l'axe o'u et $\theta$ varie de $\Pi/4N$, à $\Pi-\Pi/4\,N$, avec $N = 512$.

Sur les figures 2 et 3 est représenté un rayon C B correspondant à une valeur de l'angle $\theta$. Les valeurs des coefficients transformés sont intégrés le long du rayon C B, en ne prenant en compte que les coefficients situés entre A et B. Les coefficients situés entre C et A correspondent à des basses fréquences qui ont une densité d'énergie pratiquement indépendante de la direction et qui est donc inutile pour la mise en coïncidence des graphes, et qui, d'autre part, ont une densité d'énergie tellement importante, qu'elle dominerait celle des coefficients correspondant aux fréquences plus hautes. Le point B correspond à une limite supérieure de fréquence au-delà de laquelle les coefficients apportent surtout du bruit et sont donc peu caractéristiques de la forme du graphe.

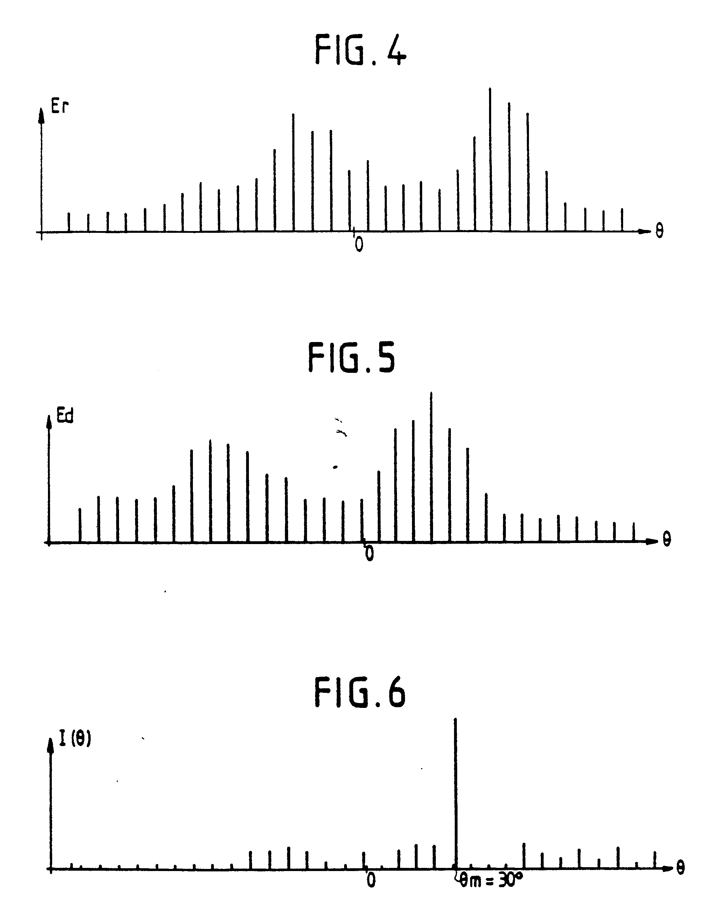

Les figures 4 et 5 représentent respectivement le graphe de l'énergie Er($\theta$) des coefficients transformés de l'image de référence, et l'énergie Ed($\theta$) des coefficients transformés de l'image à recaler. Ces graphes montrent la répartition de l'énergie dans le plan des fréquences, pour ces deux images.

Pour estimer l'angle de rotation séparant ces deux images, une quatrième étape du procédé selon l'invention consiste à calculer les valeurs de la fonction d'intercorrélation I($\theta$) de l'énergie Er($\theta$) et de l'énergie Ed($\theta$). Puis il consiste à déterminer le maximum de cette fonction d'intercorrélation. La figure 6 représente le graphe de la fonction d'intercorrélation I($\theta$) pour les fonctions de répartition correspondant aux figures 4 et 5.

Les valeurs des énergies étant des valeurs discrètes, la fonction d'intercorrélation est calculée sous la forme d'une suite de valeurs discrètes. Cette suite possède un pic de corrélation qui correspond, dans cet exemple, à un angle $\theta$ de valeur 30°. Les valeurs calculées étant discrètes, le véritable maximum de la fonction d'intercorrélation est situé généralement entre deux valeurs discrètes. Pour obtenir avec plus de précision la valeur de l'angle de rotation, il est possible d'estimer une valeur $\theta_m$ du véritable maximum par un calcul de barycentre selon la formule suivante :

$$\theta m \;=\; \frac{(i-1).\,I\,(i-1) \;+\; j.\,I\,(i) \;+\; (i+1).\,I\,(i+1)}{I\,(i-1) \;+\; I\,(i) \;+\; I\,(i+1)} \tag{3}$$

où I(j) est la valeur d'intercorrélation pour la $j^{\text{ième}}$ valeur d'angle $\theta$, qui correspond au pic de corrélation ; où I(j-1) est la valeur d'intercorrélation pour la $(j-1)^{\text{ième}}$ valeur d'angle $\theta$ ; et où I(j + 1) est la valeur de la fonction d'intercorrélation pour la $(j + 1)^{\text{ième}}$ valeur d'angle $\theta$.

Le résultat est connu modulo 180°, à cause de la symétrie hermitienne de la transformée de Fourier. Une étape ultérieure, au cours du recalage en translation, permet de lever le doute sur la valeur de l'angle de rotation ainsi déterminée. Cette étape ultérieure sera décrite plus loin.

La valeur $\theta_m$ ainsi déterminée permet de calculer les valeurs de luminance d'une image recalée en rotation, à partir des valeurs de luminance de l'image à recaler. Ce calcul sera explicité plus loin, dans le cas général où une translation est combinée avec la rotation.

En pratique, le déplacement est généralement une combinaison d'une rotation et d'une translation. Une variante du procédé selon l'invention consiste donc à déterminer un vecteur de translation, en plus de l'angle de rotation, avant de calculer les valeurs de luminance de l'image recalée.

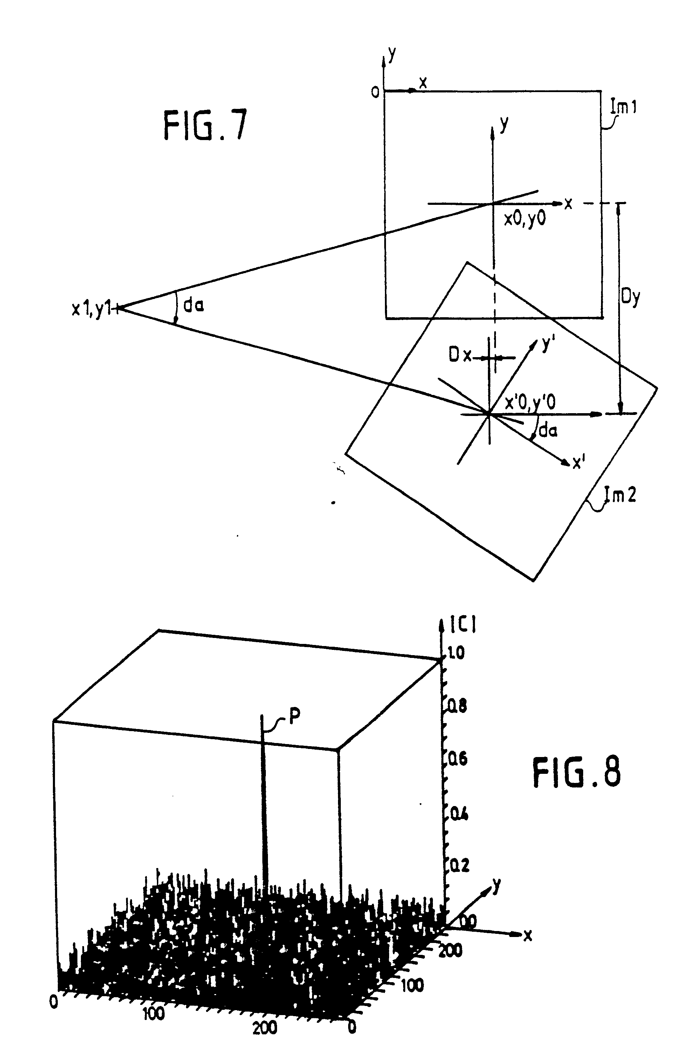

La figure 7 représente le cas général, dans lequel le déplacement d'une image est une rotation autour d'un centre de rotation de coordonnées (x1,y1) quelconques et d'angle da. L'image de référence est une image Im1 ayant un repère de coordonnées oxy dont l'origine o est au centre du premier pixel analysé. L'image à recaler est une image Im2 dont le centre a pour coordonnées (x0',y0') dans le repère oxy. Ce déplacement peut toujours être décomposé en une rotation d'angle da autour du centre (x0,y0) de l'image, et une translation de vecteur (Dx,Dy) reliant le centre de l'image de référence (x0,y0) et le centre de l'image à recaler (x0',y0'). Quel que soit le centre de la rotation considérée, l'angle de la rotation reste égal à da. Une estimation $\theta_m$ de cet angle est déterminée au cours de la première partie du procédé selon l'invention, telle qu'elle a été décrite précédemment pour une rotation pure.

La détermination du vecteur de translation (Dx, Dy) consiste tout d'abord à recaler en rotation, d'un angle $\theta_m$ la matrice des coefficients transformés de l'image à recaler.

Le calcul de la matrice des coefficients transformés, recalée en rotation d'un angle de valeur $\theta_m$, nécessite une précision supérieure à celle correspondant aux valeurs discrètes des coefficients transformés. Malheureusement, contrairement au domaine des valeurs de luminance, il n'est pas possible de calculer la valeur d'un coefficient transformé dans le domaine des fréquences, au moyen d'une interpolation linénaire entre les valeurs discrètes des coefficients transformés de l'image à recaler.

Le procédé utilisé préférentiellement pour améliorer la précision de ce calcul, permet d'obtenir un suréchantillonnage de la transformée de Fourier de chaque image. Il consiste à ajouter des colonnes de zéros et des lignes de zéros dans la matrice des valeurs de luminance représentant chaque image, avant de réaliser la transformée de Fourier. Ce procédé est connu sous l'appellation anglaise de zero-padding. Par exemple, si chaque ligne et chaque colonne de la matrice des valeurs de luminance comporte N valeurs de luminance, il consiste à ajouter N'-N colonnes de zéros et N'-N lignes de zéro, pour obtenir une matrice comportant N'xN' coefficients transformés, N et N' étant choisis égaux à des puissances entières de 2. N' est égal à ZP fois N, avec ZP égal à une puissance entière de 2. Le nombre entier ZP est appelé ordre du zero-padding. Par exemple, cet ordre peut être égal à 4.

Chaque matrice à transformer par la transformation de Fourier comporte donc seize fois plus de valeurs que la matrice de dimension NxN constituée uniquement des valeurs de luminance. Le matrice des coefficients transformés est alors constitué de N'.N' coefficients au lieu de N.N. Le suréchantillonnage ainsi obtenu dans le plan des fréquences permet de déterminer avec beaucoup plus de précision les valeurs des coefficients de la matrice recalée en rotation dans le plan des fréquences.

Le module d'un coefficient de coordonnées (U,V) dans la matrice des coefficients transformés recalée, est égal au module d'un coefficient de la matrice des coefficients transformés à recaler, ayant des coordonnées (u,v) telles que :

$$u = EN [U. \cos \theta_m + V. \sin \theta_m]$$
$$v = EN [-U. \sin 0_m + V. \cos 0_m] \qquad (4)$$

où EN désigne la partie entière d'une valeur.

On montre qu'une rotation pure conserve le module des coefficients transformés d'une image, alors qu'une translation pure, de vecteur (x2,y2) modifie leurs phases. Cette translation(Tx,Ty) multiplie par un terme de phase E(u,v), chaque coefficient de coordonnées (u,v) dans sa matrice.

$$E (u,v) = \exp 2j.\pi.(Tx.u + Ty.v) \qquad (5)$$

On montre que le fait de choisir le centre (x0,y0) de l'image de référence comme centre de rotation, au lieu de l'origine o du repère des coordonnées oxy de l'image de référence, équivaut à une translation de vecteur :

[x0 = (N-1)/2, y0 = (N-1)/2]. Pour que cette translation ne fausse pas l'estimation des coefficients de la matrice recalée et ne fausse pas le recalage en translation, il est nécessaire de multiplier par un terme de phase E'(u,v), chaque coefficient de la matrice des coefficients obtenus en appliquant la formule (4).

$$E' (u,v) = \exp \frac{-2j. \pi}{N} (u.x0' + v.y0')$$
$$\text{avec } x0' = x0 - \cos \theta_m x0 - \sin \theta_m y0$$
$$y0' = y0 + \sin \theta_m x0 - \cos \theta_m y0 \qquad (6)$$
$$x0 = y0 = \frac{N-1}{2}$$

La matrice des coefficients obtenus en appliquant les formules (4) et (6) est appelée matrice recalée en rotation.

La détermination du vecteur de translation (Dx,Dy) consiste ensuite à :
- calculer une matrice dite de <u>différence</u> de phase, dont chaque coefficient H(u,v) est égal au produit d'un coefficient transformé de l'image <u>de référence</u> F(u,v), par le conjugué G*(u,v) du coefficient homologue dans la matrice recalée en rotation, divisé par le module du produit de ces deux coefficients ;

$$H (u,v) = \frac{G (u,v) . F^* (u,v)}{|G (u,v). F (u,v)|} \qquad (7)$$

- calculer une matrice dite de <u>corrélation</u> de phase, dont chaque coefficient est égal à un coefficient transformé inverse de la matrice <u>de différence</u> de phase, par la transformation de Fourier inverse discrète, à deux dimensions ;

- classer les coefficients de la matrice de corrélation selon leur module ;
- estimer un vecteur de translation (Dx,Dy), entre l'image de référence et l'image à recaler, à partir du rang de la ligne et du rang de la colonne où est situé le coefficient ayant le plus grand module dans la matrice de corrélation.

La figure 8 représente les valeurs des modules C des coefficients de la matrice de corrélation de phase, en fonction des coordonnées x et y, pour un exemple d'images. Il y a un pic P qui se détache nettement. Les coordonnées de ce pic dans le repère oxy, sont égales aux composantes (Dx,Dy) du vecteur de translation de l'image de référence à l'image à recaler.

Pour lever l'ambiguïté de $180°$ existant sur la valeur $\theta_m$ de l'angle de rotation, le procédé consiste à : calculer deux matrices recalées en rotation, respectivement pour les deux valeurs d'angle possibles, $\theta_m$ et $\theta_m + \pi$ ; puis deux matrices de différence de phase ; puis deux matrices de corrélation de phase ; puis déterminer les deux coefficients ayant le plus grand module dans ces deux matrices de corrélation ; puis sélectionner la valeur d'angle correspondant au coefficient ayant le plus grand module.

Chaque pixel centré en un point (x,y) de l'image recalée a une valeur de luminance f(x,y) égale à celle d'un point (X,Y) de l'image à recaler, X et Y étant calculées selon les formules :
avec

$$X = (x - \frac{N+1}{2}) . \cos \theta_m - (x - \frac{N+1}{2}) . \sin \theta_m + D x + \frac{N+1}{2}$$

$$Y = (x - \frac{N+1}{2}) . \sin \theta_m - (y - \frac{N+1}{2} . \cos \theta_m + D y + \frac{N+1}{2} \qquad (8)$$

Les valeurs X et Y ne sont généralement pas entières et ne correspondent donc pas au centre d'un pixel de l'image à recaler. Il est possible de prendre la valeur de luminance du pixel dont le centre a pour coordonnées les parties entières de X et Y, mais, pour améliorer la précision du calcul des valeurs f(x,y) de la luminance de l'image recalée, une interpolation bilinéaire classique est réalisée de préférence :

$$f(x,y) = \frac{(1-ERX).(1-ERY).f(K0,L0) + (1-ERX). ERY. f(K0,L1)}{ERX. (1-ERY). f(K1,L0) + ERX. ERY. f(K1,L1)} \quad (9)$$

où (K0,L0), (K0,L1), (K1, L0),(K1,L1) sont les coordonnées des centres des pixels encadrant le point (X,Y) déterminé par les formules (8) ; où f(K0,L0), f(K0,L1), f(K1,L0), et f(K1,L1) sont les luminances de ces pixels ; et où :
ERX = X-K0 et ERY = Y-L0.

Une variante du procédé selon l'invention consiste à déterminer la matrice recalée en rotation dans le plan des fréquences, en déterminant tout d'abord une matrice dite recalée dans le plan des luminances, en calculant les valeurs de luminance correspondant à l'image courante recalée d'un angle $\theta_m$; puis en appliquant la transformation de Fourier discrète, à deux dimensions, à la matrice recalée dans le plan des luminances.

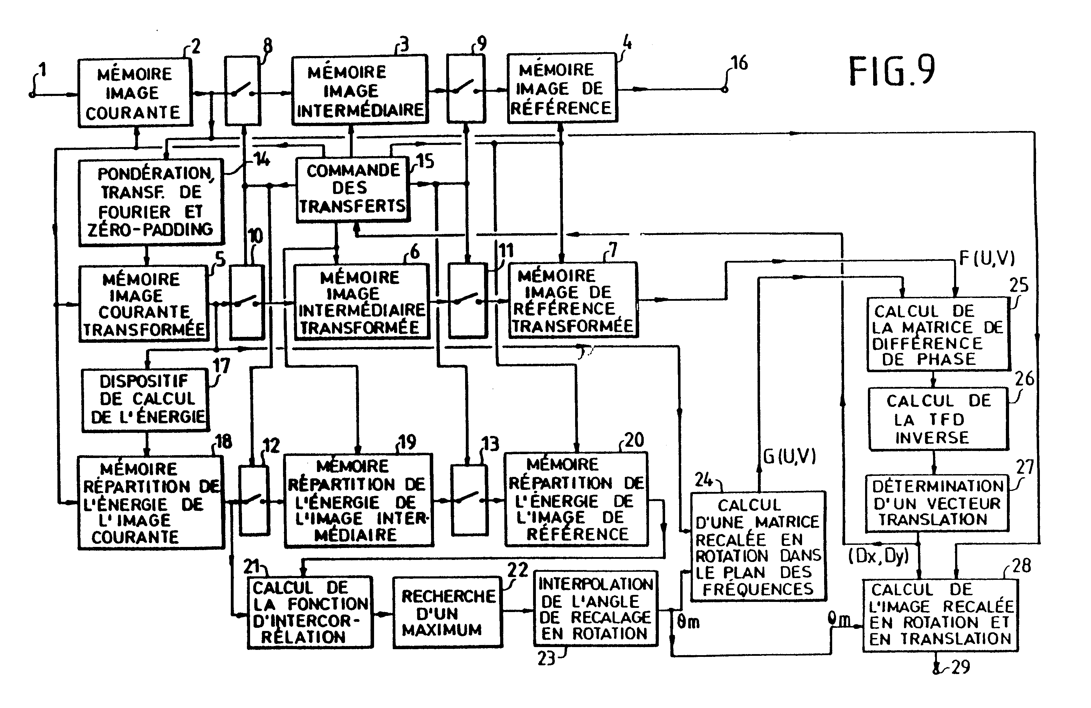

La figure 9 représente le schéma synoptique d'un exemple de réalisation d'un dispositif pour la mise en oeuvre du procédé selon l'invention. Cet exemple comporte : une mémoire d'image courante, 2 ; une mémoire d'image intermédiaire, 3 ; une mémoire d'image de référence, 4 ; une image d'image courante transformée, 5 ; une mémoire d'image intermédiaire transformée, 6 ; une mémoire d'image de référence transformée, 7 ; six dispositifs de commutation, 8 à 13 ; un dispositif 14 de pondération des valeurs de luminance, et de calcul de la transformation de Fourier discrète ; un dispositif 15 de commande des transferts entre les mémoires ; un dispositif 17 de calcul de la répartition de l'énergie d'une image ; une mémoire 18 pour stocker les valeurs de l'énergie de l'image courante ; une mémoire 19 pour stocker les valeurs de l'énergie de l'image intermédiaire ; une mémoire 20 pour stocker les valeurs de l'énergie de l'image de référence ; un dispositif 21 de calcul de la fonction d'intercorrélation des énergies ; un dispositif 22 de recherche d'un maximum ; un dispositif 23 d'interpolation de l'angle de recalage en rotation ; un dispositif 24 de calcul de la matrice recalée en rotation ; un dispositif 25 de calcul d'une matrice de différence de phase ; un dispositif 26 de calcul de la transformation de Fourier discrète inverse ; un dispositif 27 de détermination d'un vecteur de translation ; un dispositif 28 de calcul de l'image recalée en rotation et en translation.

Une borne de sortie 29 fournit les valeurs de luminance d'une image recalée en translation et en rotation, et une borne de sortie 16 fournit les valeurs de luminance de l'image de référence. Les valeurs de luminance de l'image de référence sont ainsi disponibles pour être utilisées dans d'autres traitements, par exemple pour calculer la différence entre les valeurs de luminance de l'image de référence et les valeurs de luminance de l'image recalée. Les mémoires 2 à 7 et 18 à 20 ont des entrées de commande reliées à des sorties du dispositif 15 par des liaisons non représentées pour plus de clarté.

La borne d'entrée 1 est reliée à une entrée de la mémoire 2. Une sortie de données de la mémoire 2 est reliée à une première entrée du dispositif de calcul 28, à une entrée du dispositif de commutation 8, et à une entrée du dispositif 14. La sortie du dispositif 8 est reliée à une entrée de données de la mémoire 3. Une sortie de données de la mémoire 3 est reliée à une entrée de données de la mémoire 4 par le dispositif de commutation 9. La sortie de données de la mémoire 4 est reliée à la borne de sortie 16. Une sortie du dispositif 14 est reliée à une entrée de données de la mémoire 5. Une sortie de données de la mémoire 5 est reliée à : une entrée du dispositif de calcul 17 ; une première entrée du dispositif 24, et une entrée du dispositif de commutation 10. Une sortie de ce dernier est reliée à une entrée de données de la mémoire 6. Une sortie de données de la mémoire 6 est reliée à une entrée de données de la mémoire 7 par le dispositif de commutation 11. Une sortie de données de la mémoire 7 est reliée à une première entrée du dispositif de calcul 25.

Une sortie du dispositif de calcul 17 est reliée à une entrée de données de la mémoire 18. Une sortie de données de la mémoire 18 est reliée à une première entrée du dispositif de calcul 21 et à une entrée du dispositif de commutation 12. Une sortie de ce dernier est reliée à une entrée de données de la mémoire 19. Une sortie de données de la mémoire 19 est reliée à une entrée de données de la mémoire 20 par l'intermédiaire du dispositif de commutation 13. Une sortie de données de la mémoire 20 est reliée à une seconde entrée du dispositif 21.

Les dispositifs de commutation 8, 10, et 12 ont chacun une entrée de commande reliée à une première sortie du dispositif de commande des transferts 15. Les dispositifs de commutation 9,11, et 13 ont chacun une entrée de commande reliée à une seconde sortie du dispositif 15. La sortie de données de la mémoire 20 est reliée à une seconde entrée du dispositif de calcul 21. Une sortie de ce dernier est reliée à une entrée du dispositif 22. Le dispositif d'interpolation 23 possède une entrée reliée à une sortie du dispositif 22, et une sortie reliée à une deuxième entrée du dispositif de calcul 28 et à une seconde entrée du dispositif de calcul 24. Le dispositif de calcul 24 possède une sortie reliée à une seconde entrée du dispositif de calcul 25.

Le dispositif de calcul 26 possède une entrée reliée à une sortie du dispositif 25, et une sortie reliée à une entrée du dispositif 27. Le dispositif 27 possède une sortie reliée à une entrée du dispositif de commande 15 et à une troisième entrée du dispositif de calcul 28. Ce dernier possède une sortie reliée à la borne de sortie 29.

Le dispositif 27 de détermination d'un vecteur translation fournit les composante Dx et Dy d'un vecteur de translation à l'entrée du dispositif de commande 15. Ce dernier compare les valeurs de ces composantes par rapport à deux valeurs de seuil qui sont fixées par exemple 5 et à 10, l'unité étant un pixel. Le dispositif 15 commande les mémoire 2 à 7 et 18 à 20 de telle façon que l'intervalle de temps entre l'image courante qui constitue l'image à recaler, et l'image de référence permette d'obtenir un vecteur de translation dont les composantes sont comprises entre 5 et 10, en valeur absolue. Ceci permet d'éviter d'estimer des vecteurs de translation trop petits, c'est-à-dire ne permettant pas une précision relative suffisante.

Les mémoires 2, 5 et 18 sont commandées en parallèle par le dispositif 15. Elles stockent respectivement les valeurs de luminance, les coefficients transformés par le transformation de Fourier, et les valeurs de la fonction répartition de l'énergie, pour l'image courante. Les mémoires 3, 6 et 19 sont commandées en parallèle par le dispositif 15 pour stocker respectivement les valeurs de luminance, les valeurs des coefficients transformés par la transformation de Fourier, et les valeurs de la fonction de répartition de l'énergie, pour une image intermédiaire entre l'image de référence et l'image précédant immédiatement l'image courante. Les mémoires 4, 7 et 20 sont commandées en parallèle par le dispositif 15 pour stocker respectivement les valeurs de luminance, les coefficients transformés par la transformation de Fourier, et les valeurs de l'énergie, pour l'image de référence qui est constituée par une image antérieure à l'image courante et qui en est séparée par un nombre d'images qui dépend de la vitesse de translation.

Lorsque la vitesse de translation est faible, le dispositif 15 ne commande pas le transfert de chaque image de la mémoire 3 à la mémoire 4, afin de garder la même image de référence pendant une durée correspondant à plusieurs images. Lorsque le vecteur de translation estimé a au moins une composante dont la valeur absolue est supérieure ou égale à 10 pixels, le dispositif 15 commande le transfert d'une image de la mémoire 3 à la mémoire 4. Lorsque le vecteur de translation estimé a au moins une composante dont la valeur est supérieure ou égale à 5 pixels, le dispositif 15 commande un transfert de la mémoire 2 à la mémoire 3. Les transferts sont réalisés de manière analogue dans les mémoires 5 à 7, et les mémoires 18 à 20.

Le dispositif 14 calcule les coefficients transformés de l'image courante, par un algorithme de transformation de Fourier discrète, après avoir pondéré les valeurs de luminance par la pondération de Hamming définies par la formule (2). Ce dispositif 14 met en oeuvre, par exemple, l'algorithme de Forman avec un zero-padding d'ordre 4. Le dispositif 14 reçoit sur son entrée les valeurs de luminance lues dans la mémoire 2 et restitue sur sa sortie les coefficients transformés. Ceux-ci sont ensuite inscrits dans la mémoire 5. La lecture dans la mémoire 2 et l'écriture dans la mémoire 5 sont commandées par le dispositif 15. Les valeurs des coefficients transformés sont transférés de la mémoire 5 à la mémoire 6 puis à la mémoire 7, sous la commande du dispositif 15.

Le dispositif 17 calcule les valeurs de l'énergie dans l'image courante, à partir des valeurs des coefficients transformés lus dans la mémoire 5, ceux-ci étant lus sous la commande du dispositif 15, selon une séquence prédéterminée qui correspond à un nombre prédéterminé de rayons autour du centre de l'image, par exemple 128 rayons. La sortie du dispositif 17 fournit les valeurs de l'énergie à l'entrée de données de la mémoire 18 dans laquelle elles sont inscrites sous la commande du dispositif 15. Lorsque toutes les valeurs de l'énergie ont été calculées pour l'image courante, elles sont relues dans la mémoire 18 alors que les valeurs de l'énergie de l'image de référence sont relues simultanément dans la mémoire 20.

Ces valeurs sont appliquées respectivement à la première et à la seconde entrée du dispositif de calcul 21 qui détermine les valeurs de la fonction d'intercorrélation pour les 128 valeurs d'angle possibles. Sa sortie fournit au dispositif 22 les 128 valeurs de la fonction d'intercorrélation. Le dispositif 22 recherche les deux plus grandes valeurs de la fonction d'intercorrélation ainsi que les valeurs d'angle correspondantes. Le dispositif d'interpolation 23 détermine, par une interpolation linéaire, la valeur de l'angle $\theta_m$ de recalage en rotation. Dans cet exemple de réalisation, l'angle de rotation est supposé être toujours inférieur à 180°. Il n'y a donc pas d'ambiguïté de 180° sur la valeur $\theta_m$. Le dispositif 23 fournit cette valeur à la seconde entrée du dispositif 24. La mémoire 7 fournit à la première entrée du dispositif 24, les coefficients transformés de l'image de référence, sous la commande du dispositif 15.

La sortie du dispositif 24 fournit, à la première entrée du dispositif 25, la suite des coefficients G(U,V) de la matrice recalée en rotation dans le plan des fréquences, d'un angle $\theta_m$. Ces coefficients sont déterminés en appliquant les formules (4) et (6), de la manière décrite précédemment dans la description du procédé. La sortie de la mémoire 5 fournit à la première entrée du dispositif 25, sous la commande du dispositif 15, la suite des coefficients F(U,V) qui sont les coefficients transformés de l'image courante. Le dispositif 25 calcule la matrice de différence de phase de l'image courante et de l'image de référence recalée en rotation, dans le plan de phase, en calculant les coefficients de cette matrice selon la formule (8) mentionnée précédemment.

La sortie du dispositif 25 fournit la suite des coefficients de la matrice de différence de phase, au dispositif de calcul 26 qui détermine la matrice dite de corrélation, qui est la transformée de Fourier discrète inverse de cette matrice de différence de phase. Les coefficients calculés par le dispositif 26 sont fournis au dispositif 27 qui recherche le coefficient ayant le plus grand module et qui en déduit les composantes (Dx,Dy) d'un vecteur de translation, ces composantes correspondant au rang de la ligne et au rang de la colonne du coefficient ayant le plus grand module. Les composantes du vecteur de translation sont fournies à la troisième entrée du dispositif de calcul 28. Le dispositif 28 reçoit sur sa première entrée la suite des valeurs de luminance de l'image courante lues dans la mémoire 2 sous la commande du dispositif 15. Il reçoit sur sa deuxième entrée la valeur de l'angle $\theta_m$ de recalage. Le dispositif 28 calcule la matrice des valeurs de luminance de l'image courante, recalée en rotation et en translation, en appliquant les formules (8) et (9) mentionnées précédemment et qui réalisent une interpolation bilinéaire. Il fournit ces valeurs à la borne de sortie 29.

La construction d'un tel dispositif est à la portée de l'homme de l'art, car elle est réalisable au moyen de composants classiques. Le dispositif 15 de commande des transferts peut être un dispositif séquenceur classique. Le dispositif 14 de calcul de la transformée de Fourier discrète avec pondération de Hamming et zero-padding, peut être constitué essentiellement d'un circuit intégré spécialisé pour réaliser une transformation de Fourier rapide, par exemple celui commercialisé par la marque ZORAN et de type VSP235. Les autres dispositifs de calcul de cet exemple de réalisation peuvent être constitués d'un microprocesseur à usage général, programmé pour réaliser les fonctions de calcul mentionnées précédemment.

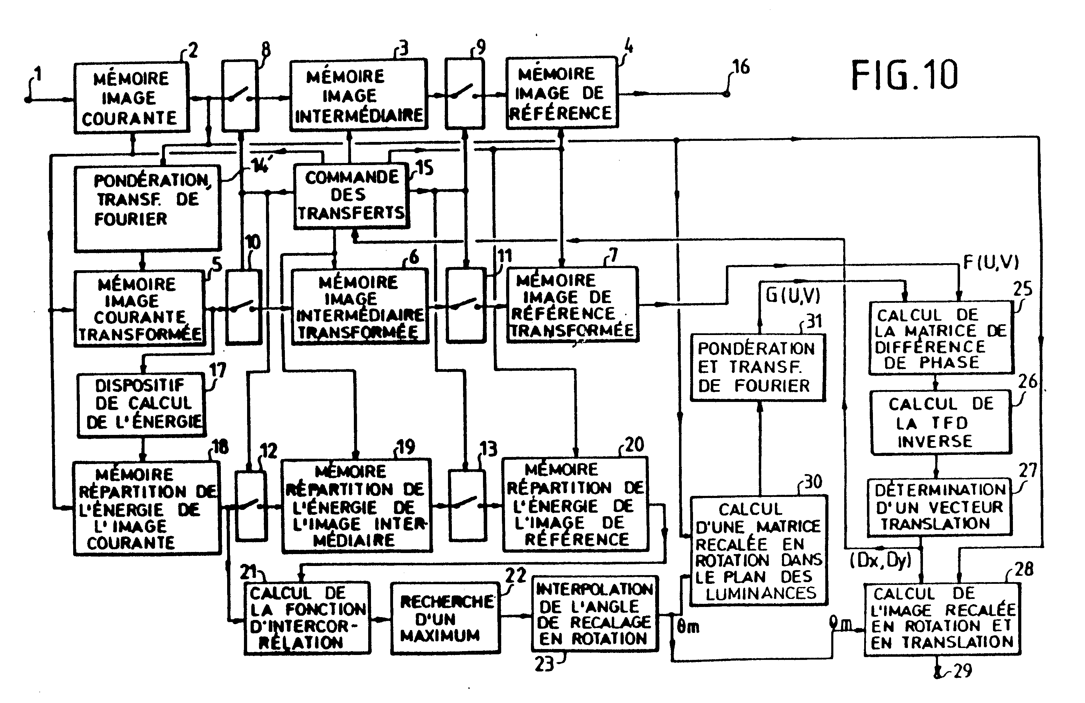

La figure 10 représente le schéma synoptique d'une variante de l'exemple de réalisation précédent, pour la mise en oeuvre de la variante du procédé selon l'invention, mentionnée pecédemment. Le dispositif de calcul 24 est remplacé par un dispositif 30 de calcul d'une matrice recalée en rotation dans le plan des luminances ; et par un dispositif 31 de pondération et de calcul de transformation de Fourier. Le dispositif de calcul 14 est remplacé par un dispositif 14' qui ne fait pas de "zéro-padding" et qui est analogue au dispositif 31. Le "zéro-padding" est inutile puisque le dispositif 30 réalise un recalage dans le plan des luminances. Ce recalage comporte une interpolation bilinéaire qui remplace le "zéro-padding" pour améliorer la précision.

Le dispositif 30 possède : une entrée reliée à la sortie du dispositif 23 pour recevoir la valeur $\theta_m$; une entrée reliée à la sortie de la mémoire 5 pour recevoir les valeurs de luminance à recaler ; et une sortie reliée à une entrée du dispositif 31. Ce dernier a une sortie fournissant les coefficients, G(u,v), de la matrice recalée dans le plan des fréquences, à une entrée du dispositif 25.

L'invention peut être appliquée à divers traitements d'images nécessitant la mise en correspondance de deux images. Par exemple, pour mettre en correspondance des images aériennes ou des images fournies par des satellites, ou bien des images fournies par des capteurs travaillant dans des bandes différentes telles que la bande visible, la bande infrarouge ou la bande radar.


## Revendications

1. Procédé pour recaler une image en rotation, par rapport à une image de référence,
caractérisé en ce que, pour déterminer un angle de recalage en rotation, il consiste à :
- échantillonner l'image à recaler et l'image de référence, selon une matrice d'échantillonnage, chaque échantillon étant représenté par la valeur de sa luminance ;
- calculer, pour l'image à recaler et pour l'image de référence :
-- une matrice dite pondérée, obtenue en pondérant la valeur de luminance de chaque échantillon, par une fonction positive décroissante en fonction de la distance de l'échantillon par rapport au centre de la matrice d'échantillonage ;
-- une matrice de coefficients transformés, par la transformation de Fourier discrète, à deux dimensions ;
-- des valeurs d'une fonction énergie ($Er(\theta)$), $Ed(\theta)$) sur des rayons (CB) répartis autour du centre de la matrice des coefficients transformés, en intégrant les valeurs des coefficients, situés sur chaque rayon, entre deux points (A,B) ayant des distances prédéterminées, par rapport au centre de la matrice ;
- calculer des valeurs d'une fonction d'intercorrélation ($I(\theta)$) des deux fonctions énergies, pour des valeurs de décalage angulaires ($\theta$) correspondant respectivement aux rayons répartis autour des centres des deux matrices de coefficients transformés ;
- estimer une valeur d'angle de recalage en rotation ($\theta_m$), à partir de la valeur discrète maximale de cette fonction d'intercorrélation.

2. Procédé selon la revendication 1, caractérisé en ce que, pour recaler une image en rotation et en translation par rapport à une image de référence, il consiste en outre à :
- calculer une matrice dite recalée en rotation dans le plan des fréquences, en appliquant, une rotation à la matrice des coefficients transformés de l'image à recaler, cette rotation étant centrée sur le centre de la matrice et ayant un angle égal à l'angle de recalage estimé précédemment ($\theta_m$), et en multipliant chaque coefficient par un terme de phase qui est fonction des coordonnées (x0,y0) du centre de l'image de référence ;
- calculer une matrice dite de différence de phase, dont chaque coefficient est égal au produit d'un coefficient transformé de l'image de référence, par le conjugué du coefficient homologue dans la matrice recalée en rotation, divisé par le module du produit de ces deux coefficients ;
- calculer une matrice dite de corrélation de phase, dont chaque coefficient est égal à un coefficient transformé inverse de la matrice de différence de phase, par la transformation de Fourier inverse ;
- rechercher parmi les coefficients de la matrice de corrélation, celui ayant le plus grand module ;
- estimer un vecteur de translation, entre l'image de référence et l'image à recaler, à partir du rang de la ligne et du rang de la colonne où est situé le coefficient ayant le plus grand module dans la matrice de corrélation ;
- calculer les valeurs de luminance d'une image recalée en rotation et en translation, à partir : des valeurs de luminance de l'image à recaler ; du vecteur de translation estimé précédemment (Dx,Dy), et de la valeur de l'angle de recalage en rotation ($\theta_m$).

3. Procédé selon la revendication 1, caractérisé en ce que, pour recaler une image en rotation et en translation par rapport à une image de référence, il consiste en outre à :
- calculer une matrice dite recalée en rotation dans le plan des luminances, en appliquant une rotation à la matrice des valeurs de luminance de l'image à recaler, cette rotation étant centrée sur le centre de la matrice et ayant un angle égal à l'angle de recalage estimé précédemment ($\theta_m$) ;
- calculer une matrice dite recalée en rotation dans le plan des fréquences, en pondérant chaque valeur de luminance de la matrice recalée en rotation dans le plan des luminances, par une fonction positive décroissante en fonction de la distance de l'échantillon correspondant, par rapport au centre de la matrice d'échantillonnage ; et en appliquant la transformation de Fourier discrète, à deux dimensions, à ces valeurs de luminance pondérées ;

- calculer une matrice dite de corrélation de phase, dont chaque coefficient est égal à un coefficient transformé inverse de la matrice de différence de phase, par la transformation de Fourier inverse ;
- rechercher parmi les coefficients de la matrice de corrélation, celui ayant le plus grand module ;
- estimer un vecteur de translation, entre l'image de référence et l'image à recaler, à partir du rang de la ligne et du rang de la colonne où est situé le coefficient ayant le plus grand module dans la matrice de corrélation ;
- calculer les valeurs de luminance d'une image recalée en rotation et en translation, à partir : des valeurs de luminance de l'image à recaler ; du vecteur de translation estimé précédemment (Dx,Dy), et de la valeur de l'angle de recalage en rotation ($\theta_m$).

4. Procédé selon l'une des revendications 2 ou 3, caractérisé en ce que, pour lever une ambiguïté de 180° existant sur la valeur de l'angle de recalage ($\theta_m$), il consiste en outre à :
- calculer deux matrices recalées en rotation dans le plan des fréquences, respectivement pour les deux valeurs d'angle possibles ; puis deux matrices de différence de phase ; puis deux matrices de corrélation de phase ; puis déterminer les deux coefficients ayant le plus grand module dans ces deux matrices de corrélation ; puis sélectionner la valeur d'angle correspondant au coefficient ayant le plus grand module.

5. Procédé selon la revendication 1, caractérisé en ce que, pour améliorer la précision du recalage en rotation, il consiste à suréchantillonner les coefficients transformés de chaque image, en adjoignant à la matrice des valeurs de luminance de cette image des colonnes de zéros et des lignes de zéros, avant de lui appliquer la transformation de Fourier.

6. Dispositif de recalage d'une image en rotation, pour la mise en oeuvre du procédé selon la revendication 1, caractérisé en ce qu'il comporte :
- des moyens (2,4) pour stocker les valeurs de luminance d'une image de référence et d'une image à recaler, ces deux images étant échantillonnées selon une matrice d'échantillonnage ;
- des premiers moyens de calcul (14) pour pondérer la valeur de luminance de chaque échantillon d'image, par une fonction positive décroissante en fonction de la distance de l'échantillon par rapport au centre de la matrice d'échantillonnage ; et pour calculer, pour chaque image, une matrice de coefficients transformés, par la transformation de Fourier discrète, à deux dimensions ;
- des deuxièmes moyens de calcul (17) pour calculer, pour chaque image, des valeurs d'une fonction énergie sur des rayons (CB) régulièrement répartis autour du centre de la matrice des coefficients transformés, en intégrant les valeurs des coefficients pondérés situés sur chaque rayon (CB), entre deux points (A,B) ayant des distances prédéterminées, par rapport au centre de la matrice des coefficients ;
- des troisièmes moyens de calcul (18) pour calculer des valeurs d'une fonction d'intercorrélation des fonctions énergies, d'une image de référence et d'une image à recaler, pour des valeurs de décalage angulaire ($\theta$) correspondant respectivement aux dits rayons (CB) ;
- des quatrièmes moyens de calcul (23) pour estimer une valeur ($\theta_m$) d'angle de recalage en rotation, à partir de la valeur discrète maximale de cette fonction d'intercorrélation.

7. Dispositif selon la revendication 6, pour réaliser en outre un recalage en translation, caractérisé en ce qu'il comporte en outre :
- des cinquièmes moyens de calcul (24) pour calculer une matrice dite recalée en rotation dans le plan de fréquences, en appliquant une rotation à la matrice des coefficients transformés de l'image à recaler calculés par les premiers moyens de calcul (14), cette rotation étant centrée sur le centre de cette matrice et ayant un angle égal à l'angle de recalage ($\theta_m$) estimé par les quatrièmes moyens de calcul (22,23) ;
- des sixièmes moyens de calcul (25) pour calculer une matrice dite de différence de phase, dont chaque coefficient est égal au produit d'un coefficient transformé de l'image de référence, par le conjugué du coefficient homologue dans la matrice recalée en rotation, divisé par le module du produit de ces deux coefficients ;
- des septièmes moyens de calcul (26) pour calculer une matrice dite de corrélation de phase en appliquant la transformation de Fourier inverse à la matrice de corrélation de phase ;
- des huitièmes moyens de calcul (27) pour rechercher, parmi les coefficients de la matrice de corrélation, celui ayant le plus grand module, et en déduire un vecteur de translation dont les composantes sont égales respectivement aux coordonnées de ce coefficient dans sa matrice ;
- des neuvièmes moyens de calcul (28) pour calculer les valeurs de luminance d'une image recalée en rotation et en translation, à partir : des valeurs de luminance de l'image à recaler ; du vecteur de translation (Dx,Dy) calculé par les huitièmes moyens de calcul (27) ; et de la valeur de l'angle de recalage en rotation ($\theta_m$) estimé par les quatrièmes moyens de calcul (22,23).

8. Dispositif selon la revendication 6, pour réaliser en outre un recalage en translation, caractérisé en ce

EP 0 368 745 A1

qu'il comporte en outre :
- des cinquièmes moyens de calcul (30,31) pour calculer une matrice dite recalée en rotation dans le plan des luminances en appliquant une rotation à la matrice des valeurs de luminance de l'image a recaler, cette rotation étant centrée sur le centre de cette matrice et ayant un angle égal à l'angle de recalage ($\theta_m$) estimé par les quatrièmes moyens de calcul (22,23) ; et pour calculer une matrice dite recalée en rotation dans le plan des fréquences, en pondérant chaque valeur de luminance de la matrice recalée dans le plan des luminances par une fonction positive décroissante en fonction de la distance de l'échantillon correspondant, par rapport au centre de la matrice d'échantillonnage ; et en appliquant la transformation de Fourier discrète, à deux dimensions, à ces valeurs de luminance pondérées ;
- des sixièmes moyens de calcul (25) pour calculer une matrice dite de différence de phase, dont chaque coefficient est égal au produit d'un coefficient transformé de l'image de référence, par le conjugué du coefficient homologue dans la matrice recalée en rotation, divisé par le module du produit de ces deux coefficients ;
- des septièmes moyens de calcul (26) pour calculer une matrice dite de corrélation de phase en appliquant la transformation de Fourier inverse à la matrice de corrélation de phase ;
- des huitièmes moyens de calcul (27) pour rechercher, parmi les coefficients de la matrice de corrélation, celui ayant le plus grand module, et en déduire un vecteur de translation dont les composantes sont égales respectivement aux coordonnées de ce coefficient dans sa matrice ;
- des neuvièmes moyens de calcul (28) pour calculer les valeurs de luminance d'une image recalée en rotation et en translation, à partir : des valeurs de luminance de l'image à recaler ; du vecteur de translation (Dx,Dy) calculé par les huitièmes moyens de calcul (27) ; et de la valeur de l'angle de recalage en rotation ($\theta_m$) estimé par les quatrièmes moyens de calcul (22,23).

FIG.1

FIG.2

FIG.3

# FIG. 4

Er

0 → θ

# FIG.5

Ed

0 → θ

# FIG.6

I (θ)

0    θm = 30° → θ

# FIG.7

# FIG.8

FIG.9

FIG.10

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | WO-A-8 705 769  (B.B.C.)<br>* Page 1, lignes 35-37; page 3, lignes 22-24; page 4, ligne 9 - page 5, ligne 2; page 8, ligne 23 - page 9, ligne 23 *<br><br>--- | 1-3,5,6,8 | G 06 F   15/70 |
| A,D | IEEE TRANSACTIONS ON PATTERN ANALYSIS AND MACHINE INTELLIGENCE, vol. PAMI-9, no. 5, septembre 1987, pages 868-690, IEEE, New York, US; C.C. LIN et al.: "Classification of partial 2-D shapes using fourier descriptors"<br>----- | | |

DOMAINES TECHNIQUES RECHERCHES (Int. Cl.5)

G 06 F   15/70

Le présent rapport a été établi pour toutes les revendications

| Lieu de la recherche | Date d'achèvement de la recherche | Examinateur |
|---|---|---|
| LA HAYE | 21-02-1990 | BURGAUD C. |

EPO FORM 1503 03.82 (P0402)